(19) Europäisches Patentamt
European Patent Office
Office européen des brevets

(11) Publication number: **0 471 592 B1**

(12) **EUROPEAN PATENT SPECIFICATION**

(45) Date of publication of patent specification: **09.08.95**

(51) Int. Cl.[6]: **B01D 53/14**, C01B 17/60

(21) Application number: **91307607.1**

(22) Date of filing: **16.08.91**

# (54) Process for absorption of sulfur compounds from fluids using certain piperidines, piperazines, or anhydrides of monocarboxylic amino acids.

(30) Priority: **16.08.90 US 569117**
**16.08.90 US 569120**
**17.05.91 US 702795**

(43) Date of publication of application:
**19.02.92 Bulletin 92/08**

(45) Publication of the grant of the patent:
**09.08.95 Bulletin 95/32**

(84) Designated Contracting States:
**DE GB**

(56) References cited:
**US-A- 3 793 434**
**US-A- 4 217 238**
**US-A- 4 783 327**

(73) Proprietor: **THE DOW CHEMICAL COMPANY**
**2030 Dow Center,**
**Abbott Road**
**Midland,**
**Michigan 48640 (US)**

(72) Inventor: **Chang, Dane**
**16127 Cerca Blanca**
**Houston,**
**Texas 77083 (US)**
Inventor: **Christiansen, Steven H.**
**65 Robinhood Lane**
**Richwood,**
**Texas 77531 (US)**
Inventor: **Crump, Druce K.**
**142 Oyster Creek,**
**Number 48**
**Lake Jackson,**
**Texas 77566 (US)**

(74) Representative: **Burford, Anthony Frederick et al**
**W.H. Beck, Greener & Co.**
**7 Stone Buildings**
**Lincoln's Inn**
**London WC2A 3SZ (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method for removing sulfur compounds from gaseous streams. More particularly, it relates to a method for removing sulfur compounds including sulfur dioxide ($SO_2$) from fluids.

Removal of such sulfur compounds as sulfur dioxide, for example from fluids such as industrial and utility gas emissions, is increasingly important. Acid rain is believed to occur when sulfur dioxide in such emissions undergoes chemical changes in the atmosphere and returns to earth with precipitation.

There are numerous techniques for removing sulfur compounds from gas streams containing them. One common process employs limestone scrubbing. The disadvantage of this process is the necessity of disposing of the large volume of solid waste produced. The wastes are not generally recycled. Another system, taught in US-A-4,366,134, employs potassium or sodium citrate to selectively remove $SO_2$ from a gas stream. While the wastes from this process can be recycled, recycle is expensive because thermally stable salts are formed and require higher heat for regeneration.

More recent patents teach the use of certain piperazinone derivatives. For instance, US-A-4,112,049 teaches use of certain piperazinones and N,N'- alkyl piperazinone. In another patent, US-A-4,530,704, the removal of $SO_2$ from a gas stream is accomplished by contacting a gas stream containing it with an aqueous solution of a piperazinone, morpholinone or N-alkyl substituted derivatives thereof, for example N,N'-dimethyl-2-piperazinone. In US-A-4,783,327 certain hydroxyalkyl substituted piperazinones are taught for use in a similar manner.

DE-A-2108282 discloses the removal of hydrogen sulfide from gases containing sulfur dioxide by reaction in the presence of a polar aprotic solvent containing certain urea or thiourea derivatives. These derivatives include 5,5-pentamethylene biuret.

US-A-4217238 discloses the removal of acidic components from gaseous mixtures by contact with an aqueous solution comprising a basic salt and an activator system comprising (1) at least one sterically hindered amine and (2) an aminoacid which is a cosolvent for the sterically hindered amine. Reference is made to the removal of, inter alia, sulfur dioxide in a mixture containing at least carbon dioxide. Exemplified sterically hindered amines include 2-methylpiperazine; 2,5-dimethylpiperazine; and 2-tertbutylamino-methyl-1,4-dimethylpiperazine and exemplified amino acids include tipecolinic acid (ie 2-piperidine carboxylic acid); 2-piperidine acetic acid; 2-piperidine propionic acid; 4-methyl-2-piperidine carboxylic acid; 6-methyl-2-piperidine carboxylic acid; 6-methyl-3-piperidine carboxylic acid; 1-methyl-2-piperidine carboxylic acid; 1-methyl-3-piperidine carboxylic acid and 1-methyl-4-amino-4-piperidine carboxylic acid. There is no suggestion that those acids could be used alone.

US-A-3793434 discloses the removal of acid gases from gaseous mixtures by contacting with an aqueous solution of an alkali metal salt and a piperidine derivative. The piperidine derivatives included piperidines in which a ring carbon atom is substituted by a carboxyl group although there is no exemplification of such compounds. Sulfur dioxide is included amongst the specified acid gases. There is no suggestion that the piperidine derivatives could be used alone.

US-A-4783327 discloses a method of removing sulfur dioxide from a gas stream by treatment with an aqueous solution containing 4-(2-hydroxyalkyl)-2-piperazinone or a derivative thereof having one oxo substituent on a ring carbon atom.

It would be advantageous to have a process for removal of sulfur compounds such as sulfur dioxide which employs an aqueous solution and uses an absorbent which has a high capacity for absorbing sulfur dioxide. The absorbent would desirably be regenerable. It is also desirable that this absorbent has adequate water compatibility at ambient or higher temperatures and its salts are water soluble to avoid inducing scaling or plugging of plant equipment.

According to the present invention, there is provided a process for removing $SO_2$ from a fluid containing $SO_2$, the improvement comprising employing, as an absorbent for the $SO_2$, an aqueous solution containing as the only $SO_2$-absorbent(s) at least one compound represented by Formula A:

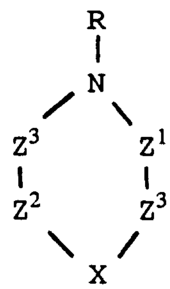

Formula A

wherein:

X is $-Z^3-$ or -N(R)-; and

(a) when X is $-Z^3-$, $Z^1$ and $Z^2$ are both $-Z^3-$; each $Z^3$ independently is $-(CR_2)-$ or -(CR)=; and each R independently is hydrogen; optionally inertly substituted alkyl; aldehyde; or carboxylic acid or salt thereof, provided that at least one R is a carbonyl-containing group; or

(b) when X is -N(R)-:

$Z^1$ and $Z^2$ are both $-Z^3-$ or both -(C=O)-; each $Z^3$ independently is $-(CR_2)-$; and

(1) when $Z^1$ and $Z^2$ are both $-Z^3-$, each R independently is hydrogen; optionally inertly substituted alkyl; aldehyde; or carboxylic acid or salt thereof, provided that at least one R is a carbonyl-containing group; or

(2) when both $Z^1$ and $Z^2$ are -(C=O)-, each R independently is hydrogen; optionally inertly substituted alkyl; aldehyde; carboxylic acid or salt thereof; or an aryl or aralkyl group containing at least one carboxylic ester, a carboxylic acid or salt thereof, ether, aldehyde, ketone or sulfoxide group.

Thus, the present invention is a process for removing $SO_2$ from a fluid containing $SO_2$ by employing, as an absorbent for $SO_2$, an aqueous solution containing as the only $SO_2$-absorbent(s) one or more compounds compound represented by Formula I, II or III:

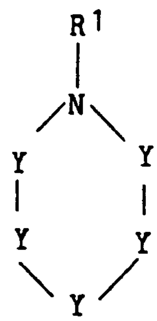

Formula I

wherein each Y is independently $-(CR^2{}_2)-$ or $-(CR^2)=$ and each $R^1$ or $R^2$ is independently hydrogen, an alkyl group; an hydroxyalkyl group; an aldehyde group; a carboxylic acid group or salt thereof; an alkyl group containing at least one carboxylic ester, a carboxylic acid or salt thereof, ether, aldehyde, ketone, or sulfoxide group; wherein the compound has at least one carbonyl group (a carbonyl-containing group), that is, at least one $R^1$ or $R^2$ comprises -(C=O)- for example as in an aldehyde-, ester-, carboxylic acid- (or salt), or ketone-containing group;

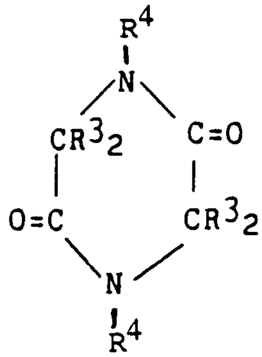

Formula II

wherein each $R^3$ or $R^4$ is independently hydrogen; an alkyl group; a hydroxyalkyl group; an aldehyde group; a carboxylic acid or salt group; or an alkyl, aryl, or aralkyl group containing at least one carboxylic ester, a carboxylic acid or salt, ether, aldehyde, ketones or sulfoxide group;

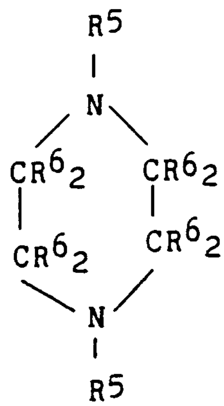

Formula III

wherein each $R^6$ or $R^5$ is independently hydrogen; an alkyl group; a hydroxyalkyl group; an aldehyde group; a carboxylic acid or salt group; an alkyl group containing at least one carboxylic ester, carboxylic acid or salt, ether, aldehyde, ketone or sulfoxide; and wherein at least one $R^5$ or $R^6$ is a carbonyl-containing group, such as an aldehyde group, a carboxylic acid containing group, a carboxyl ester group, or a ketone-containing group.

In each of the possible R groups, each alkyl or aryl group is of a size or molecular weight suitable for use in absorbing sulfur dioxide, preferably in aqueous solutions. Preferably each alkyl or aryl, including the substituted groups such as hydroxyalkyl groups, have from 1 to 12 carbon atoms, more preferably, from 1 to 6 carbon atoms. Each alkyl group or alkyl portion of an aralkyl group is suitably cyclic, branched or unbranched and optionally is at least partially unsaturated (alkylene), for example vinyl or allyl groups or substituents.

Each alkyl group is unsubstituted or inertly substituted, that is substituted with groups which do not interfere undesirably with use of the compounds to absorb sulfur dioxide, with solubility of the compounds in water or with regeneration of an aqueous solution of the compound after sulfur dioxide is absorbed. The groups preferably also exhibit chemical and thermal stability because the compounds often undergo repeated absorption/regeneration cycles. Exemplary of such inert substituents are hydroxyl groups; carbonyl groups including those in aldehydes, esters, acids, carboxylates and ketones; and sulfoxides.

Preferred substituents, R, are those which enhance solubility in water, preferably without decreasing the capacity for absorbing $SO_2$, the regenerability of the compound after absorption, or the chemical and heat stability under conditions of use. Preferred substituents are generally hydrogen, formyl groups, alkyl groups and groups having at least one hydroxyl, or carboxylic acid or salt group; more preferably hydrogen, alkyl or hydroxyalkyl. When the R substituent includes a salt, the salt suitably has any counterion which allows water solubility, preferably such a metal cation, more preferably an alkali metal counterion, or mixtures thereof.

Compounds of Formula I include piperidines having at least one carbonyl-containing substituent on the ring nitrogen and/or on at least one ring carbon atom; compounds wherein $R^1$ is other than hydrogen, more preferably a carbonyl-containing group, most preferably a formyl or carboxylate group. Formyl groups on nitrogen generally enhance regenerability, while carboxylic acids and salts generally enhance absorption of $SO_2$.

Exemplary of compounds of Formula I are 1-formyl piperidine; ethyl piperidine-2-carboxylate; ethyl 1-piperidine propionate; 1-piperidine propionic acid; 1-piperidine carboxaldehyde; and 4-piperidine carboxaldehyde. Preferred compounds include 1-formyl piperidine and 1-piperidine propionic acid.

Piperidines having carbonyl-containing substituents on the ring nitrogen are commercially available, and are prepared by methods within the skill in the art, for instance by procedures such as those taught by Jones et al. in J. Chem. Soc., (1952), pp. 3261-3264, teaching the reaction of carbon dioxide and a pyridine to produce formyl piperidines; Hess, et al. in Chem. 50, 385-9 (1917) teaching synthesis of 2-piperidene carboxylate by oxidation of picoline with formaldehyde; Treibs, et al. in Chem. Ber., 89, 51-57 (1956) teaching preparation of such compounds as 3-piperidine-propionate and methyl-2-piperidinopropionate by reaction of nitrite and bromo-substituted dicarboxylic acids via oximino and dioximino dicarboxylic acids; Drake, et al. in J. Amer. Chem. Soc., 56, 697-700 (1934) teaching preparation of alkyl-1-piperidinopropionate, for example by reaction of certain bromo substituted acrylic esters and piperidine; or Sternberg, et al. in J. Amer. Chem. Soc., 75, 3148-3152 (1953) teaching preparation of N-formyl piperidine by reacting dicobalt octacarbonyl with piperidine in the presence of a Lewis base.

Piperidines having carbonyl-containing substitution on a ring carbon are commercially available and are known in the art. They are prepared by methods within the skill in the art, for instance by procedures such as those taught in US-A-2,680,116 (Trick, et al.) which teaches treatment of such compounds as dioxodialkyl-piperidines or derivatives thereof with formic acid esters followed by reduction to produce piperidine-diones; GB-A-742,733 (Roche Products, Ltd.) which teaches reaction of certain dioxodialkyltetrahydropyridines with formaldehyde and reduction to produce certain alkyltetrahydropyridinediones and alkylpiperidinediones; Shechter, et al. in J. Amer. Chem. Soc., 73, 3087-3091 (1951) teach preparation of certain 2-piperidones by reacting cyclopentanones with hydrazoic acid sulfuric acids. Other methods of preparing 2-piperidones are taught by Langley et al. in J. Amer. Chem. Soc, 74,, 2012-15 (1952) and by Horning, et al.; Ibid, pp. 2680-2681.

Preferred compounds among compounds of Formula II include anhydrides produced from amine-containing acids, such as glycine anhydride, and 1,4-dimethyl-2,5-piperazinedione.

Exemplary of preferred anhydrides are 2,5-piperazinedione (glycine anhydride); 1-methyl-2,5-piperazinedione; 1,4-dimethyl-2,5-piperazinedione; 1-(2-hydroxyethyl)-2,5-piperazinedione: 1,4-bis(2-hydroxyethyl)-2,5-piperazinedione; 1-(2-hydroxyethyl)-4-methyl-2,5-piperazinedione; 4-(2-hydroxyethyl)-2,5-piperazinedione; 1-aminoethyl-2,5-piperazinedione; 1-formyl-2,5-piperazinedione; 1-acetyl-2,5-piperazinedione; 1-(carboxymethyl)-2,5-piperazinedione; 1-carbethoxy-2,5-piperazinedione; 3-(2-hydroxyethyl)-2,5-piperazinedione; 3,6-bis(2-hydroxyethyl)-2,5-piperazinedione; 1-(2-hydroxyethyl)-3-methyl-2,5-piperazinedione; 3-methyl-2,5-piperazinedione; 3-formyl-2,5-piperazinedione; 1,3,4,6-tetramethyl-2,5-piperazinedione; 1-(2-hydroxyethyl)-3,3-dimethyl-2,5-piperazinedione; 1,4-bis(2-hydroxyethyl)-3,3-dimethyl-2,5-piperazinedione; 1,4-bis(2-hydroxyethyl)-3,3,6,6-tetramethyl-2,5-piperazinedione; 1-butyl-2,5-piperazinedione; 1,4-dibutyl-2,5-piperazinedione; and 3,3'-dibutyl-2,5-piperazinedione. Preferred compounds include 2,5-piperazinedione and 1,4-dimethyl-2,5-piperazinedione.

Such anhydrides are commercially available and are known in the art. They are prepared by methods within the skill in the art, for instance by processes taught in Synthetic Methods of Organic Chemistry, W. Theilheimer, Vol. 13, p. 224 (1959).

Preferred compounds among compounds of Formula III include piperazines having at least one carbonyl-containing substituent on the ring nitrogen and/or on at least one ring carbon atom; compounds wherein $R^5$ is other than hydrogen, more preferably a carbonyl-containing group, most preferably a formyl or carboxylate group; compounds in which at least one carbonyl group is on a carbon atom within 1, more preferably adjacent to the nitrogen; compounds having more than one oxygen atom, more preferably more than one carbonyl oxygen. Formyl groups on nitrogen generally enhance regenerability, while carboxylic acids and salts generally enhance absorption of $SO_2$.

Exemplary of the compounds of Formula III are piperazines such as ethyl-1-piperazine carboxylate; 1,4-piperazine-dicarboxylic acid; 1-succinylpiperazine; 1-formyl piperazine, 4-formylpiperazine; 1,4-diformylpiperazine; 1-formyl-2-methylpiperazine; 1-formyl-2,5-dimethylpiperazine; 1-(2-hydroxyethyl)-4-sulfoxyl piperazine; and 1-piperazine carboxylic acid. Preferred compounds include ethyl-1-piperazine carboxylate; 1,4-diformylpiperazine; and 1-succinylpiperazine.

Such piperazines are commercially available and are known in the art. They are prepared by methods within the skill in the art, for instance by processes taught in Kirk-Othmer Encyclopedia of Chemical Technology, vol. 2, pp 295-299 (1978).

Among compounds of Formula I, II, and III absorbent compounds having high boiling points relative to water are desirable to prevent overhead loss of the absorbent during a thermal regeneration step. The subject compounds possess a much higher boiling point than the trimethyl phosphate employed for that purpose in US-A-4,320,101.

Among compounds of Formula I, II, and III preferred compounds are those which have a capacity for absorbing $SO_2$ which, in combination with the water solubility, is suitable for use in aqueous solutions for absorbing $SO_2$. The capacity for absorbing $SO_2$ is determined by saturating a solution of a known concentration of the absorbent in water with $SO_2$, for example by sparging $SO_2$ (preferably in a mixture simulating that found in for example smokestacks) into the solution. Sparging is continued until the solution has absorbed a maximum amount of $SO_2$ (saturation). Then the concentration of bisulfite (including sulfite that may be present) and bisulfate (including sulfate) ions are determined, for example using a standardized commercially available ion chromatograph unit. Such determinations are within the skill in the art and are exemplified in the Examples of this invention. Capacity is calculated as the mole ratio of absorbed $SO_2$ (as measured by the sum of the moles of bisulfite and bisulfate) to absorbent compound.

The capacity for absorbing $SO_2$ is considered in combination with the water solubility of the compound because the absorbing capacity of a solution is the capacity of the absorbent multiplied by the amount of absorbent present. An arbitrary parameter CS defined as:

$$CS = [\text{Capacity in (moles } SO_2\text{/moles absorbent)}]X(\text{Solubility in moles absorbent/liter at } 23^\circ C)$$

is determined for a potential absorbent. Absorbents used in the practice of the invention preferably have a CS of at least 0.05, more preferably at least 0.5, most preferably at least 0.7 moles $SO_2$/liter at 23°C.

The compounds used in the present invention are employed in aqueous solution usually at a concentration of from 0.1 weight percent in water up to their saturation concentration in water at the temperature at which the absorber is operated. The absorbent solution, after use, is preferably thermally regenerated, for example by passing steam through the solution, and recycled to the absorption step. The absorber usually is operated at a temperature of from 0° to 120°C, but is preferably operated at a temperature of from 5° to 75°C, most preferably at from 5° to 60°C.

Pressures of from atmospheric to 10 atmospheres (0 to 900 kPag) usually are employed, but 0 to 10 psig (0 to 70 kPag) is preferably and conveniently employed. Higher temperatures and pressures are not deleterious so long as they are below the decomposition conditions of the absorbent, but equipment design modifications may be required to allow for pressure and temperature resistance. Fluids being treated in the practice of this invention suitably contain any amount of $SO_2$ for example from one ppm (parts per million) (by volume) up to 100 volume percent, preferably from 100 ppm to 3000 ppm (by volume). The fluids are suitably in any form suitable for sufficient contact, direct or indirect, with the aqueous solution to permit absorption of $SO_2$. Gas, liquid, suspension and other fluid forms are suitable, but gas form is preferred.

The absorbent compounds are suitably employed using any process within the skill in the art, preferably by contact (direct or indirect) with the fluid containing $SO_2$. Direct contact particularly contact such as flowing the fluid (preferably gas) through the aqueous solution is preferred. Other means of direct contact include contact of the aqueous solution with $SO_2$-containing liquid (for example under pressure), optionally with release of pressure after absorption. Indirect contact, such as through a membrane, is also suitable.

Thermal regeneration of the absorbent suitably takes place at any temperature below the thermal decomposition temperature of the absorbent compound, preferably at a temperature of from 75°C to 150°C, most preferably from 90°C to 120°C, at atmospheric pressure. Reduced pressure or pressures above atmospheric are suitable, but 0 to 10 psig (0 to 70 kPag) is convenient. Regeneration at 100°C at atmospheric pressure is particularly convenient because water in the aqueous solution boils and can be refluxed while the $SO_2$ is released.

Regenerability of an absorbent is a measure of the ability of the absorbent to release $SO_2$ (so that the absorbent may be reused). Regenerability is determined by measuring the bisulfate and bisulfite concentrations in a solution of known concentration of absorbent which has been saturated with $SO_2$ as in the determination of $SO_2$ absorption capacity. This solution is referred to herein as the enriched solution. Then a portion of the enriched solution is heated to strip $SO_2$ as a gas. For purposes of the measurement, stripping is done at the boiling point of the solution, 100°C with $N_2$ sparge at 0.5 SCFH (Standard cubic feet per hour) (equivalent to 4 $x10^{-6}$ $m^3/s$ at 16°C) for 4 hours. During the stripping, additional water is

frequently added to make up the water loss due to evaporation. A sample of this stripped solution is analyzed for bisulfite and bisulfate concentration by the same method used to analyze the concentration of the original enriched solution. The difference in combined bisulfite and bisulfate concentrations between the stripped and enriched $SO_2$ solution is used to calculate the percent regenerability of each solution using the equation:

$$\text{Percent Regenerability} = \left(1 - \frac{\text{Total bisulfite plus bisulfate concentration in stripped solution}}{\text{Total bisulfite plus bisulfate concentration in enriched solution}}\right) \times 100$$

Percent regenerability of absorbents used in the practice of the invention is preferably at least 30, more preferably at least 50, most preferably at least 60 percent.

The following examples illustrate the use of the absorbent compounds in the process of the invention. All parts, ratios and percentages are by weight unless otherwise indicated.

Examples 1 - 4

For each of the absorbent compounds listed in Table 1, the amount of compound indicated in the Table was placed into a graduate cylinder and deionized water was added to bring the total volume to 70 ml (milliliters) at room temperature (23 °C) to form a solution. A 5/95 volume percent mixture of $SO_2$ and $N_2$ - (respectively) gases was sparged through a coarse (100-150 $\mu$m) gas dispersion tube into the solution at 2.0 standard cubic feet per hour, meaning cubic feet at 60 °F(16 °C) at atmospheric pressure passed per hour (SCFH) (equivalent to $1.6 \times 10^{-5}$ $m^3/s$ at 16 °C) for 4 hours to form a $SO_2$ enriched solution. A small sample of the $SO_2$ enriched solution was analyzed for bisulfite [$HSO_3^-$] and bisulfate [$HSO_4^-$] concentration using a standardized ion chromatograph commercially available from Dionex Corporation under the trade designation Dionex™ IC Series 4000, having a column packed with AG4/AS4 resin also commercially available from Dionex Corporation, a conductivity detector commercially available from Wescant, Corp. and a Dionex anion micro membrane suppressor commercially available from Dionex Corp. under the trade designation 8080.

The sum of the bisulfite and bisulfate concentrations was used to calculate the $SO_2$ capacity (mole ratio of $SO_2$/absorbent compound) as indicated in the Table. The reported concentrations were corrected for the absorption of water in the absence of absorbent.

Then, the remaining $SO_2$ enriched solution was transferred into a flask and heated to boil on a hot plate at 100 °C with $N_2$ sparge (0.5 SCFH) ( $4 \times 10^{-6}$ $m^3/s$ at 16 °C) for 4 hours to strip $SO_2$ as a gas. During the stripping, additional water was frequently added to make up the water loss due to evaporation. A sample of this stripped solution was analyzed for bisulfite and bisulfate concentration by the same method used to analyze the concentration of the original enriched solution. The difference in combined bisulfite and bisulfate concentration between the stripped and original (enriched) $SO_2$ solution was used to calculate the $SO_2$ percent regenerability of each solution using the equation:

$$\text{Percent Regenerability} = \left(1 - \frac{\text{Total bisulfite plus bisulfate concentration in stripped solution}}{\text{Total bisulfite plus bisulfate concentration in enriched solution}}\right) \times 100$$

The CS, calculated by multiplying the capacity times the solubility in moles/l, is included in Table 1. The compounds used in Examples 1, 2 and 4 were used in concentrations less that saturation; therefore the CS reported in the table was based on concentration in place of solubility.

TABLE I

| Ex. No. | Compound | grams of compound | moles of compound | moles $SO_2$ in enriched solution | $SO_2$ capacity | Moles $SO_2$ in stripped solution | $SO_2$ regenerability (percent) | CS* in Moles $SO_2$/liter |
|---|---|---|---|---|---|---|---|---|
| 1 | Ethyl piperidine 2-carboxylate | 9.93 | 0.0632 | 0.0527 | 0.83 | 0.0372 | 64 | 0.75 |
| 2 | 1-Formyl piperidine | 21.4 | 0.1872 | 0.0711 | 0.38 | 0.0112 | 84 | 1.02 |
| 3 | Ethyl 1-piperidine propionate | 19.5 | 0.1050 | 0.0403 | 0.38 | 0.0072 | 82 | 0.57 |
| 4 | 1-piperidine propionic acid | 19.5 | 0.1239 | 0.1049 | 0.85 | 0.0198 | 81 | 1.50 |

*Only the compound used in Example 3 is used at maximun solubility, others are used less than saturation, and would have a CS greater than the value indicated which is based on concentration.

The data in Table 1 show that absorbents preferred for use in the practice of this invention had CS values within the preferred range.

Examples 5-9

The process of Example 1 was repeated except using the compounds and amounts shown in Table 2 with the results shown therein.

TABLE II

| Ex. No. | Compound | grams of compound | moles of compound | moles $SO_2$ in enriched solution | $SO_2$ capacity | Moles $SO_2$ in stripped solution | $SO_2$ regenerability percent | CS* in moles $SO_2$/liter |
|---|---|---|---|---|---|---|---|---|
| 5 | Ethyl-1-piperazine carboxylate | 22.68 | 0.1419 | 0.0920 | 0.66 | 0.0460 | 50.0 | 1.34 |
| 6 | 1,4-Diformyl piperazine | 20.19 | 0.1420 | 0.0655 | 0.46 | 0.0026 | 96.1 | 0.93 |
| 7 | 1-Succinyl piperazine | 15.00 | 0.0806 | 0.0898 | 0.50 | 0.0372 | 58.6 | 0.58 |
| 8 | Glycine anhydride | 0.34 | 0.0030 | 0.0545 | 1.66 | 0.0018 | 96.7 | 0.07 |
| 9 | 1,4-dimethyl-2,5-piperazinedione | 8.00 | 0.0563 | 0.0828 | 1.47 | 0.0022 | 97.3 | 1.18 |

*The reported CS is that for the concentration used, which in the case of Examples 5-7 is less than saturation, making the reported CS less than true CS at saturation.

The compounds used in Examples 5-7 are used in concentrations less than saturation; therefore, the CS reported is based on those concentrations and is less than the true CS.

## Claims

1. A process for removing $SO_2$ from a fluid containing $SO_2$, the improvement comprising employing, as an absorbent for the $SO_2$, an aqueous solution containing as the only $SO_2$-absorbent(s) at least one compound represented by Formula A:

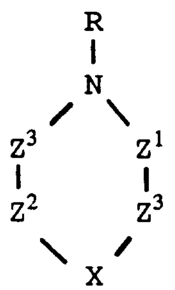

Formula A

wherein:
X is $-Z^3-$ or -N(R)-; and
(a) when X is $-Z^3-$:
$Z^1$ and $Z^2$ are both $-Z^3-$; each $Z^3$ independently is $-(CR_2)-$ or $-(CR)=$; and each R independently is hydrogen; optionally inertly substituted alkyl; aldehyde; or carboxylic acid or salt thereof, provided that at least one R is a carbonyl-containing group; or
(b) when X is -N(R)-:
$Z^1$ and $Z^2$ are both $-Z^3-$ or both -(C=O)-;
each $Z^3$ independently is $-(CR_2)-$; and
(1) when $Z^1$ and $Z^2$ are both $-Z^3-$, each R independently is hydrogen; optionally inertly substituted alkyl; aldehyde; or carboxylic acid or salt thereof, provided that at least one R is a carbonyl-containing group; or
(2) when both $Z^1$ and $Z^2$ are -(C=O)-, each R independently is hydrogen; optionally inertly substituted alkyl; aldehyde; carboxylic acid or salt thereof; or an aryl or aralkyl group containing at least one carboxylic ester, a carboxylic acid or salt thereof, ether, aldehyde, ketone or sulfoxide group.

2. A process of Claim 1, wherein at least one compound of Formula A is represented by Formula I:

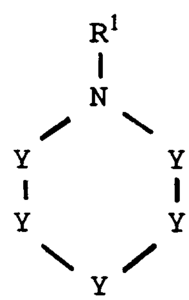

Formula I

wherein each Y is independently $-(CR^2_2)-$ or $-(CR^2)=$ and each $R^1$ or $R^2$ is independently hydrogen, an alkyl group; an hydroxyalkyl group; an aldehyde group; a carboxylic acid group or salt thereof; an alkyl group containing at least one carboxylic ester, a carboxylic acid or salt thereof, ether, aldehyde, ketone, or sulfoxide group; wherein the compound has at least one carbonyl group.

3. A process of Claim 1, wherein at least one compound of Formula A is represented by Formula II:

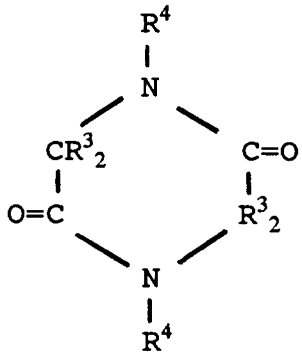

Formula II

wherein each $R^3$ or $R^4$ is independently hydrogen; an alkyl group; a hydroxyalkyl group; an aldehyde group; a carboxylic acid or salt thereof; or an alkyl, aryl, or aralkyl group containing at least one carboxylic ester, a carboxylic acid or salt thereof, ether, aldehyde, ketone or sulfoxide group.

4. A process of Claim 1, wherein at lest one compound of Formula A is represented by Formula III:

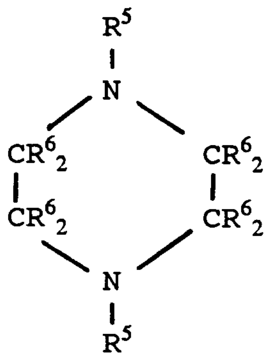

Formula III

wherein each $R^6$ or $R^5$ is independently hydrogen; an alkyl group; a hydroxyalkyl group; an aldehyde group; a carboxylic acid or salt thereof; an alkyl group containing at least one carboxylic ester, carboxylic acid or salt thereof, ether, aldehyde, ketone or sulfoxide; and wherein at least one $R^6$ or $R^5$ is a carbonyl-containing group.

5. A process of any one of the preceding claims, wherein the R substituents individually are selected from hydrogen, alkyl, formyl and groups having at least one hydroxyl or carboxylic acid or salt thereof.

6. A process of any one of the preceding claims, wherein each alkyl group or moiety has from 1 to 6 carbon atoms.

7. A process of any one of the preceding claims, wherein said compound is a piperidine or piperazine having at least one carbonyl-containing group on the ring nitrogen.

8. A process of Claim 7, wherein at least one $R^1$ or $R^5$ is formyl or carboxylic acid or a salt thereof.

9. A process of any one of the preceding claims, wherein said compound is a piperidine or piperazine having carbonyl-containing substitution on a ring carbon atom.

10. A process of Claim 2, wherein said compound is selected from ethyl piperidine-2-carboxylate; ethyl 1-piperidine propionate; 1-piperidine propionic acid; 1-piperidine carboxaldehyde; 4-piperidine carboxaldehyde; and 1-formyl-piperidine.

**11.** A process of Claim 4, wherein said compound is selected from:
ethyl-1-piperazine carboxylate,
1,4-diformylpiperazine,
1-succinylpiperazine,
1-(2-hydroxyethyl)-4-sulfoxylpiperazine,
1-formylpiperazine,
1-piperazinecarboxylic acid,
1,4-piperazinedicarboxylic acid,
1-formyl-2-methylpiperazine, and
1-formyl-2,5-dimethylpiperazine.

**12.** A process of Claim 3, wherein said compound is selected from:
glycine anhydride,
1-methyl-2,5-piperazinedione,
1,4-dimethyl-2,5-piperazinedione,
1-(2-hydroxyethyl)-2,5-piperazinedione,
1-aminoethyl-2,5-piperazinedione,
1,4-bis(2-hydroxyethyl)-2,5-piperazinedione,
1-formyl-2,5-piperazinedione,
1,4-bis(2-hydroxyethyl)-3,3-dimethyl-2,5-piperazinedione,
1-acetyl-2,5-piperazinedione,
1-carbethoxy-2,5-piperazinedione,
1-(carboxymethyl)-2,5-piperazinedione,
3-hydroxyethyl-2,5-piperazinedione,
3,6-bis(2-hydroxyethyl)-2,5-piperazinedione,
3-methyl-2,5-piperazinedione,
3-formyl-2,5-piperazinedione,
4-(2-hydroxyethyl)-2,5-piperazinedione,
1-(2-hydroxyethyl)-3-methyl-2,5-piperazinedione,
1,3,4,6-tetramethyl-2,5-piperazinedione,
1-(2-hydroxyethyl)-3,3-dimethyl-2,5-piperazinedione,
1,4-bis(2-hydroxyethyl)-3,3,6,6-tetramethyl-2,5-piperazinedione,
1-butyl-2,5-piperazinedione,
1,4-dibutyl-2,5-piperazinedione, and
3,3'-dibutyl-2,5-piperazinedione.

**13.** A process of any one of the preceding claims, wherein the aqueous solution contains a concentration of the absorbent compound of at least 0.1 weight percent; and wherein absorption of the $SO_2$ from the fluid is conducted at a temperature of from 0 °C to 120 °C.

**14.** A process of any one of the preceding claims, wherein after absorption of $SO_2$ by the aqueous solution, $SO_2$ is removed from the aqueous solution by heating the solution.

**15.** A process of Claim 14, wherein said solution is heated to a temperature of from 75 °C to 150 °C.

**16.** A process of any one of the preceding claims, wherein the absorbent has a percent regenerability of at least 30 percent.

**17.** A process of any one of the preceding claims, wherein the absorbent has a CS of at least 0.05.

**18.** The use of an aqueous solution of a compound as defined in Claim 1 to absorb $SO_2$.

**19.** A use as claimed in Claim 18, wherein the compound is as defined in any one of Claims 2 to 17.

## Patentansprüche

**1.** Verfahren zur Entfernung von $SO_2$ aus einem $SO_2$ enthaltendenFluid, wobei die Verbesserung darin besteht, daß als ein Absorptionsmittel für das $SO_2$ eine wäßrige Lösung verwendet wird, die als das

(die) einzige(n) $SO_2$-Absorptionsmittel mindestens eine durch die folgende Formel A dargestellte Verbindung enthält:

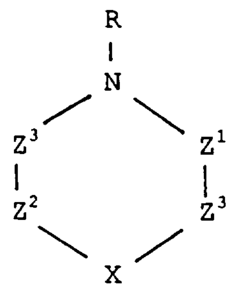

Formel A

worin:
X $Z^3$ oder -N(R)- ist, und
(a) wenn X $Z^3$ ist:
dann sind $Z^1$ und $Z^2$ beide $Z^3$, wobei jedes $Z^3$ unabhängig -($CR_2$)-oder -(CR) = ist und jedes R ist unabhängig Wasserstoff, wahlweise inert substituiertes Alkyl, Aldehyd oder eine Carbonsäure oder ein Salz davon ist, mit der Maßgabe, daß mindestens ein R eine Carbonyl-enthaltnde Gruppe ist, oder
(b) wenn X -N(R)- ist:
dann sind $Z^1$ und $Z^2$ beide $Z^3$ oder beide -(C = O)-, wobei jedes $Z^3$ unabhängig -($CR_2$)- ist, und
(1) wenn $Z^1$ und $Z^2$ beide $Z^3$ sind, dann ist jedes R unabhängig Wasserstoff, wahlweise inert substituiertes Alkyl, Aldehyd oder eine Carbonsäure oder ein Salz davon, mit der Maßgabe, daß mindestens ein R eine Carbonyl-enthaltende Gruppe ist, oder
(2) wenn beide $Z^1$ und $Z^2$ -(C = O)- sind, dann ist jedes R unabhängig Wasserstoff, wahlweise inert substituiertes Alkyl, Aldehyd, eine Carbonsäure oder ein Salz davon, oder eine Aryl- oder Aralkylgruppe, die mindestens einen Carbonsäureester, eine Carbonsäure oder ein Salz davon, eine Ether-, Aldehyd-, Keto- oder Sulfoxidgruppe enthält.

**2.** Verfahren nach Anspruch 1, wobei mindestens eine Verbindung der Formel A durch die folgende Formel I dargestellt ist:

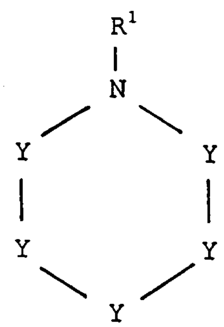

Formel I

worin jedes Y unabhängig -($CR^2_2$)- oder -($CR^2$) = ist und jedes $R^1$ oder $R^2$ unabhängig Wasserstoff, eine Alkylgruppe, eine Hydroxyalkylgruppe, eine Aldehydgruppe, eine Carbonsäuregruppe oder ein Salz davon, eine Alkylgruppe, die mindestens einen Carbonsäureester, eine Carbonsäure oder ein Salz davon, eine Ether-, Aldehyd-, Keto- oder Sulfoxidgruppe enthält, worin die Verbindung mindestens eine Carbonylgruppe besitzt.

**3.** Verfahren nach Anspruch 1, wobei mindestens eine Verbindung der Formel A durch die folgende Formel II dargestellt ist:

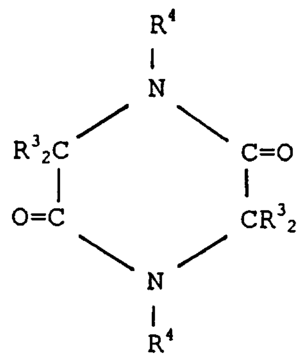

Formel II

worin jedes $R^3$ oder $R^4$ unabhängig Wasserstoff, eine Alkylgruppe, eine Hydroxyalkylgruppe, eine Aldehydgruppe, eine Carbonsäure oder ein Salz davon ist, oder eine Alkyl-, Aryl- oder Aralkylgruppe, welche mindestens einen Carbonsäureester, eine Carbonsäure oder ein Salz davon, eine Ether-, Aldehyd-, Keto- oder Sulfoxidgruppe, enthält.

4. Verfahren nach Anspruch 1, wobei mindestens eine Verbindung der Formel A durch die folgende Formel III dargestellt ist:

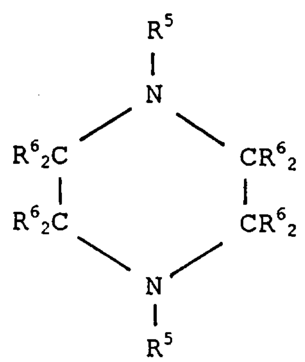

Formel III

worin jedes $R^6$ oder $R^5$ unabhängig Wasserstoff, eine Alkylgruppe, eine Hydroxyalkylgruppe, eine Aldehydgruppe, eine Carbonsäure oder ein Salz davon, eine Alkylgruppe, welche mindestens einen Carbonsäureester, eine Carbonsäure oder ein Salz davon, eine Ether-, Aldehyd-, Keto- oder Sulfoxidgruppe enthält, ist und worin mindestens ein $R^6$ oder $R^5$ eine eine Carbonyl-enthaltende Gruppe ist.

5. Verfahren nach einem der vorhergehenden Ansprüche, wobei die Substituenten R einzeln unter Wasserstoff, Alkyl, Formyl und Gruppen mit mindestens einer Hydroxy- oder einer Carbonsäuregruppe oder einem Salz davon ausgewählt werden.

6. Verfahren nach einem der vorhergehenden Ansprüche, wobei jede Alkylgruppe oder jeder Rest 1 bis 6 Kohlenstoffatome besitzt.

7. Verfahren nach einem der vorhergehenden Ansprüche, wobei die Verbindung ein Piperidin oder Piperazin mit mindestens einer Carbonyl-enthaltenden Gruppe am Ring-Stickstoff ist.

8. Verfahren nach Anspruch 7, wobei mindestens ein $R^1$ oder $R^5$ Formyl oder eine Carbonsäure oder ein Salz davon ist.

9. Verfahren nach einem der vorhergehenden Ansprüche, wobei die Verbindung ein Piperidin oder Piperazin mit einer Carbonylenthaltenden Substitution am Ring-Kohlenstoffatom ist.

**10.** Verfahren nach Anspruch 2, wobei die Verbindung ausgewählt ist unter Ethylpiperidin-2-carboxylat, Ethyl-1-piperidinpropionat, 1-Piperidinpropionsäure, 1-Piperidincarboxaldehyd, 4-Piperidincarboxaldehyd und 1-Formyl-piperidin.

**11.** Verfahren nach Anspruch 4, wobei die Verbindung ausgewählt ist unter:
Ethyl-1-piperazincarboxylat,
1,4-Diformylpiperazin,
1-Succinylpiperazin,
1-(2-Hydroxyethyl)-4-sulfoxylpiperazin,
1-Formylpiperazin,
1-Piperazincarbonsäure,
1,4-Piperazindicarbonsäure,
1-Formyl-2-methylpiperazin und
1-Formyl-2,5-dimethylpiperazin.

**12.** Verfahren nach Anspruch 3, wobei die Verbindung ausgewählt ist unter:
Glycinanhydrid,
1-Methyl-2,5-piperazindion,
1,4-Dimethyl-2,5-piperazindion,
1-(2-Hydroxyethyl)-2,5-piperazindion,
1-Aminoethyl-2,5-piperazindion,
1,4-Bis(2-hydroxyethyl)-2,5-piperazindion,
1-Formyl-2,5-piperazindion,
1,4-Bis(2-hydroxyethyl)-3,3-dimethyl-2,5-piperazindion,
1-Acetyl-2,5-piperazindion,
1-Carbethoxy-2,5-piperazindion,
1-(Carboxymethyl)-2,5-piperazindion,
3-Hydroxyethyl-2,5-piperazindion,
3,6-Bis(2-hydroxyethyl)-2,5-piperazindion,
3-Methyl-2,5-piperazindion,
3-Formyl-2,5-piperazindion,
4-(2-Hydroxyethyl)-2,5-piperazindion,
1-(2-Hydroxyethyl)-3-methyl-2,5-piperazindion,
1,3,4,6-Tetramethyl-2,5-piperazindion,
1-(2-Hydroxyethyl)-3,3-dimethyl-2,5-piperazindion,
1,4-Bis(2-hydroxyethyl)-3,3,6,6-tetramethyl-2,5-piperazindion,
1-Butyl-2,5-piperazindion,
1,4-Dibutyl-2,5-piperazindion, und
3,3'-Dibutyl-2,5-piperazindion.

**13.** Verfahren nach einem der vorhergehenden Ansprüche, wobei die wäßrige Lösung die absorbierende Verbindung in einer Konzentration von mindestens 0,1 Gew.-% enthält und wobei die Absorption des $SO_2$ aus dem Fluid bei einer Temperatur von 0 °C bis 120 °C durchgeführt wird.

**14.** Verfahren nach einem der vorhergehenden Ansprüche, wobei nach Absorption von $SO_2$ durch die wäßrige Lösung das $SO_2$ durch Erhitzen der Lösung aus der wäßrigen Lösung entfernt wird.

**15.** Verfahren nach Anspruch 14, wobei die Lösung auf eine Temperatur von 75 °C bis 150 °C erhitzt wird.

**16.** Verfahren nach einem der vorhergehenden Ansprüche, wobei das Absorptionsmittel eine prozentuale Regenerierbarkeit von mindestens 30 % aufweist.

**17.** Verfahren nach einem der vorhergehenden Ansprüche, wobei das Absorptionsmittel einen CS-Wert von mindestens 0,05 aufweist.

**18.** Verwendung einer wäßrigen Lösung einer Verbindung nach Anspruch 1 zur Absorption von $SO_2$.

19. Verwendung nach Anspruch 18, wobei die Verbindung wie in einem der Ansprüche 2 bis 17 definiert ist.

**Revendications**

1. Dans un procédé pour l'élimination de $SO_2$ d'un fluide contenant du $SO_2$, l'amélioration comprenant l'utilisation, comme agent absorbant le $SO_2$, d'une solution aqueuse contenant comme seul(s) agent(s) absorbant le $SO_2$, au moins un composé représenté par la Formula A:

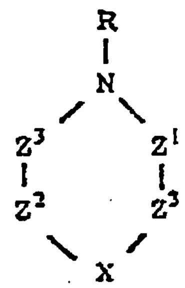

Formule A

où:
X est $-Z^3-$ ou -N(R)-, et
(a) lorsque X est $-Z^3-$:
$Z^1$ et $Z^2$ sont tous deux $-Z^3-$, chaque $Z^3$ est indépendamment $-(CR_2)-$ ou -(CR)=; et chaque R est indépendamment hydrogène; alcoyle éventuellement substitué de manière inerte; aldéhyde; ou acide carboxylique ou un sel de celui-ci, pour autant qu'au moins un R est un groupe contenant du carbonyle; ou
(b) lorsque X est -N(R)-:
$Z^1$ et $Z^2$ sont tous deux $-Z^3-$ ou tous deux -(C=O)-;
chaque $Z^3$ indépendamment est $-(CR_2)-$; et
(1) lorsque $Z^1$ et $Z^2$ sont tous deux $-Z^3-$, chaque R est indépendamment hydrogène; alcoyle éventuellement substitué de manière inerte; aldéhyde; ou acide carboxylique ou un sel de celui-ci, pour autant qu'au moins un R est un groupe contenant du carbonyle; ou
(2) lorsque $Z^1$ et $Z^2$ sont tous deux -(C=O)-, chaque R est indépendamment hydrogène; alcoyle éventuellement substitué de manière inerte; aldéhyde; ou acide carboxylique ou un sel de celui-ci, ou un groupe aryle ou aralkyle contenant au moins un ester carboxylique, un acide carboxylique ou un sel de celui-ci, éther, aldéhyde, cétone ou groupe sulfoxyde.

2. Procédé selon la revendication 1, dans lequel au moins un composé de la Formule A est représenté par la Formule I:

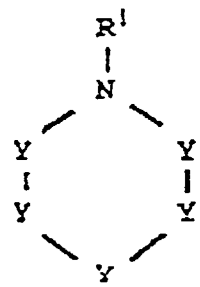

Formule I

où chaque Y est indépendamment $-(CR^2_2)-$ ou $-(CR^2)=$ et chaque $R^1$ ou $R^2$ est indépendamment hydrogène, un groupe alcoyle; un groupe hydroxyalcoyle; un groupe aldéhyde; un groupe acide carboxylique ou un sel de celui-ci; un groupe alcoyle contenant au moins un ester carboxylique, un acide carboxylique ou un sel de celui-ci,éther, aldéhyde, cétone, ou groupe sulfoxyde; dans lequel le composé comporte au moins un groupe carbonyle.

3. Procédé selon la revendication 1, dans lequel au moins un composé de formule A est représenté par la Formula II:

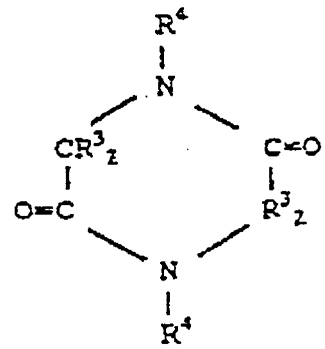

Formule II

où chaque $R^3$ ou $R^4$ est indépendamment hydrogène; un groupe alcoyle; un groupe hydroxyalcoyle; un groupe aldéhyde; un acide carboxylique ou un sel de celui-ci; ou un groupe alcoyle, aryle ou aralkyle contenant au moins un ester carboxylique, un acide carboxylique ou un sel de celui-ci, éther, aldéhyde, cétone ou groupe sulfoxyde.

4. Procédé selon la revendication 1, dans lequel au moins un composé de Formula A est représenté par la Formula III:

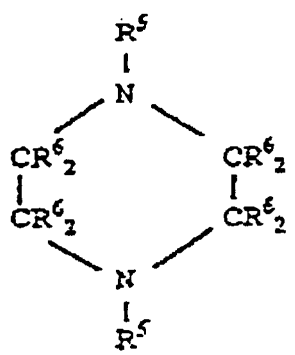

Formule III

où chaque $R^6$ ou $R^5$ est indépendamment hydrogène; un groupe alcoyle; un groupe hydroxyalcoyle; un groupe aldéhyde; un acide carboxylique ou un sel de celui-ci; un groupe alcoyle contenant au moins un ester carboxylique, acide carboxylique ou un sel de celui-ci, éther, aldéhyde, cétone ou sulfoxyde; et ou au moins un $R^6$ ou $R^5$ est un groupe contenant du carbonyle.

5. Procédé selon l'une quelconque des revendications précédentes, dans lequel les substituants R sont individuellement choisis parmi hydrogène, alcoyle, formyle et les groupes ayant au moins un hydroxyle ou acide carboxylique ou un sel de celui-ci.

6. Procédé selon l'une quelconque des revendications précédentes, dans lequel chaque groupe ou fraction alcoyle comporte de 1 à 6 atomes de carbone.

7. Procédé selon l'une ou l'autre des revendications précédentes, dans lequel ledit composé est une pipéridine ou une pipérazine comportant au moins un groupe contenant un carbonyle sur l'azote du cycle.

8. Procédé selon la revendication 7, dans lequel au moins un $R^1$ ou $R^5$ est formyle ou acide carboxylique ou un sel de celui-ci.

9. Procédé selon l'une quelconque des revendications précédentes, dans lequel ledit composé est une pipéridine ou une pipérazine comportant une substitution contenant un carbonyle sur un atome de

carbone du cycle.

**10.** Procédé selon la revendication 2, dans lequel ledit composé est choisi parmi les éthylpipéridine-2-carboxylate; propionate d'éthyl-1-pipéridine; acide 1-pipéridine-propionique, 1-pipéridine-carboxaldéhyde; 4-pipéridine-carboxaldéhyde; et 1-formyl-pipéridine.

**11.** Procédé selon la revendication 4, dans lequel ledit composé est choisi parmi les:
carboxylate d'éthyl-1-pipérazine,
1,4-diformylpipérazine,
1-succinylpipérazine,
1-(2-hydroxyéthyl)-4-sulfoxylpipérazine,
1-formylpipérazine,
acide 1-pipérazinecarboxylique,
acide 1,4-pipérazinedicarboxylique,
1-formyl-2-méthylpipérazine, et
1-formyl-2,5-diméthylpipérazine.

**12.** Procédé selon la revendication 3, dans lequel ledit composé est choisi parmi les:
anhydride de glycine,
1-méthyl-2,5-pipérazinedione,
1,4-diméthyl-2,5-pipérazinedione,
1-(2-hydroxyéthyl)-2,5-pipérazinedione,
1-amino-éthyl-2,5-pipérazinedione,
1,4-bis(2-hydroxyéthyl)-2,5-pipérzinedione,
1-formyl-2,5-pipérazinedione,
1,4-bis(2-hydroxyéthyl)-3,3-diméthyl-2,5-pipérazinedione,
1-acétyl-2,5-pipérazinedione,
1-carbéthoxy-2,5-pipérazinedione,
1-(carboxyméthyl)-2,5-pipérazinedione,
3-hydroxyéthyl-2,5-pipérazinedione,
3,6-bis(2-hydroxyéthyl)-2,5-pipérazinedione,
3-méthyl-2,5-pipérazinedione,
3-formyl-2,5-pipérazinedione,
4-(2-hydroxyéthyl)-2,5-pipérazinedione,
1-(2-hydroxyéthyl)-3-méthyl-2,5-pipérazinedione,
1,3,4,6-tétraméthyl-2,5-pipérazinedione,
1-(2-hydroxyéthyl)-3,3-diméthyl-2,5-pipérazinedione,
1,4-bis(2-hydroxyéthyl)-3,3,6,6-tétraméthyl-2,5-pipérazinedione,
1-butyl-2,5-pipérazinedione,
1,4-dibutyl-2,5-pipérazinedione, et
3,3'-dibutyl-2,5-pipérazinedione.

**13.** Procédé selon l'une quelconque des revendications précédentes, dans lequel la solution aqueuse contient une concentration du composé absorbant d'au moins 0,1 pour cent en poids, et dans laquelle l'absorption du $SO_2$ du fluide est effectuée à une température de 0 °C à 120 °C.

**14.** Procédé selon l'une quelconque des revendications précédentes, dans lequel, après absorption du $SO_2$ par la solution aqueuse, le $SO_2$ est éliminé de la solution aqueuse par chauffage de la solution.

**15.** Procédé selon la revendication 14, dans lequel ladite solution est chauffée à une température de 75 °C à 150 °C.

**16.** Procédé selon l'une quelconque des revendications précédentes, dans lequel l'agent absorbant a une régénérabilité en pourcentage d'au moins 30 pour cent.

**17.** Procédé selon l'une quelconque des revendications précédentes, dans lequel l'agent absorbant a un CS d'au moins 0,05.

**18.** Utilisation d'une solution aqueuse d'un composé tel que défini dans la revendication 1 pour absorber le $SO_2$.

**19.** Utilisation selon la revendication 18, dans laquelle le composé est tel que défini dans l'une quelconque des revendications 2 à 17.